# EUROPÄISCHE PATENTANMELDUNG

(11) **EP 3 048 405 A1**
(43) Veröffentlichungstag der Anmeldung: **27.07.2016**
(21) Anmeldenummer: 15151782.8
(22) Anmeldetag: 20.01.2015
(51) Int. Cl.: F27B 9/30, F27B 9/24, F27D 25/00

(54) **Tragrollenwechselvorrichtung**

(71) Anmelder: LOI Thermprocess GmbH, 45141 Essen (DE)
(72) Erfinder: Balster, Frank, 48301 Nottuln (DE); Wachholder, Horst, 45277 Essen (DE)
(74) Vertreter: Zenz Patentanwälte Partnerschaft mbB

(57) **Zusammenfassung**

Bei einer Tragrollenwechselvorrichtung (18) zum Wechseln einer Tragrolle (2) eines Rollenherdofens (1), aufweisend: ein abdichtbares Gehäuse (16) mit einer Schleuse (17), über die ein Zugang unter Ausschluss der Umgebungsatmosphäre auf eine zu demontierende Tragrolle (2) des Rollenherdofens (1) vom Inneren des Gehäuses (16) aus möglich ist, und wenigstens eine zum Demontieren und Montieren von Tragrollen (2) ausgebildete Tragrollenhandhabungsvorrichtung (15, 15'), die in dem Gehäuse (16) verfahrbar angeordnet ist, soll eine Lösung geschaffen werden, durch die ein Tragrollenwechsel möglich ist, ohne dass Staub und Faserreste in der Öffnung des Rollenherdofens vorhanden sind, wenn eine neue Tragrolle eingesetzt bzw. montiert wird. Dies wird dadurch erreicht, dass eine zum Reinigen einer in einer Seitenwand (8) des Rollenherdofens (1) ausgeformte Öffnung (19), durch die hindurch eine Tragrolle (2) in den Rollenherdofen (1) einbringbar und herausnehmbar ist, ausgebildete Reinigungsvorrichtung (20) innerhalb des Gehäuses (16) angeordnet ist.

## Beschreibung

Die vorliegende Erfindung richtet sich auf eine Tragrollenwechselvorrichtung zum Wechseln einer Tragrolle eines Rollenherdofens, aufweisend ein gegenüber der äußeren Umgebungsatmosphäre abdichtbares Gehäuse, das eine an den Rollenherdofen ankoppelbare Schleuse aufweist, über die ein Zugang unter Ausschluss der Umgebungsatmosphäre auf eine zu demontierende Tragrolle des Rollenherdofens vom Inneren des Gehäuses aus möglich ist, und wenigstens eine zum Demontieren und Montieren von Tragrollen ausgebildete Tragrollenhandhabungsvorrichtung, die in dem Gehäuse verfahrbar angeordnet ist und die zumindest teilweise durch die Schleuse hindurch aus dem Gehäuse ausfahrbar ausgebildet ist.

Eine Tragrollenwechselvorrichtung der Eingangs bezeichneten Art ist zum Beispiel aus der DE 10 2011 079 771 A1 bekannt. Diese Tragrollenwechselvorrichtung ist seitlich neben dem Rollenherdofen verfahrbar und weist eine eingehauste, d.h. in einem Gehäuse untergebrachte, Tragrollenhandhabungsvorrichtung auf, wobei bei einem Wechsel einer Tragrolle eine Lanze der Tragrollenhandhabungsvorrichtung in die hohle Tragrolle einfährt, die auszutauschende Tragrolle anhebt und die Tragrolle mitsamt eines am Längsende der Tragrolle angebrachten Isolationsstopfens aus einer in der Wandung des Rollenherdofens ausgebildeten Öffnung, in welcher die Tragrolle im Betrieb drehbar gelagert ist, heraus zieht. Beim Herausziehen der zu demontierenden Tragrolle können Staub oder auch Faserreste des Isolationsstopfens in der Öffnung verbleiben, was sich nachteilig und ungünstig auf die Positionierung und Einbringung des Isolationsstopfens sowie der Lagerung einer neuen Tragrolle bei deren Montage auswirken kann.

Der Erfindung liegt die Aufgabe zugrunde eine Lösung zu schaffen, die auf konstruktiv einfache Weise eine Tragrollenwechselvorrichtung bereitstellt, bei welcher die aus dem Stand der Technik bekannten Nachteile vermieden werden und durch die ein Tragrollenwechsel möglich ist, ohne dass Staub und Faserreste in der Öffnung des Rollenherdofens vorhanden sind, wenn eine neue Tragrolle eingesetzt bzw. montiert wird.

Bei einer Tragrollenwechselvorrichtung der Eingangs bezeichneten Art wird die Aufgabe erfindungsgemäß dadurch gelöst, dass eine zum Reinigen einer in einer Seitenwand des Rollenherdofens ausgeformten Öffnung, durch die hindurch eine Tragrolle in den Rollenherdofen einbringbar und herausnehmbar ist, ausgebildete Reinigungsvorrichtung innerhalb des Gehäuses angeordnet ist. Mit anderen Worten ist eine Reinigungsvorrichtung für die Tragrollenwechselvorrichtung vorgesehen, die innerhalb des gegenüber der äußeren Umgebungsatmosphäre abdichtbaren Gehäuses untergebracht ist. Dabei dient die Reinigungsvorrichtung dazu, eine Öffnung in einer Seitenwand des Rollenherdofens von Staub und/oder Faserresten zu reinigen. Die Öffnung ist in einer Seitenwand des Rollenherdofens ausgeformt und wird dazu verwendet, eine alte Tragrolle aus dem Ofen herauszuziehen und eine neue Tragrolle einzuschieben, wobei ein Längsende der Tragrolle an der Öffnung drehbar gelagert ist.

Vorteilhafte und zweckmäßige Ausgestaltungen und Weiterbildungen der Erfindung ergeben sich aus den Unteransprüchen.

Durch die Erfindung wird eine Tragrollenwechselvorrichtung zum Wechseln einer Tragrolle eines Rollenherdofens zur Verfügung gestellt, die sich durch eine funktionsgerechte Konstruktion auszeichnet. Eine derartige Tragrollenwechselvorrichtung mit einer Reinigungsvorrichtung ist einfach und kostengünstig ausgebildet und gewährleistet, dass die Öffnung in der Wandung des Rollenherdofens nach dem Herausziehen einer auszutauschenden Tragrolle gereinigt werden kann, wenn Faserreste von Isoliermaterial oder Staub in der Öffnung vorhanden sein sollten. Insbesondere die Rückstände von Isoliermaterial können den Einbau einer neuen Tragrolle in den Rollenherdofen infolge der damit einhergehenden Verkleinerung der Öffnung erschweren, so dass ab einem gewissen Grad der Verunreinigung durch Faserrückstände die Öffnung in dem Rollenherdofen mit Hilfe der Reinigungsvorrichtung gereinigt werden muss oder es andernfalls zu Problemen beim Einsetzen einer neuen Tragrolle kommt.

Eine konstruktiv besonders günstige und effiziente Möglichkeit, die Reinigungsvorrichtung innerhalb des Gehäuses anzuordnen und zu betreiben, sieht die Erfindung in Ausgestaltung der Tragrollenwechselvorrichtung dadurch vor, dass die Reinigungsvorrichtung innerhalb des Gehäuses verfahrbar angeordnet ist und wenigstens zum Teil durch die Schleuse hindurch aus dem Gehäuse ausfahrbar ausgebildet ist. Dementsprechend wird die Schleuse sowohl von der Tragrollenhandhabungsvorrichtung als auch von der Reinigungsvorrichtung genutzt. Es muss also keine separate Durchgangsöffnung in der Wandung des Gehäuses vorgesehen sein, damit die Reinigungsvorrichtung die Öffnung des Rollenherdofens reinigen kann.

In weiterer Ausgestaltung der erfindungsgemäßen Tragrollenwechselvorrichtung ist vorgesehen, dass eine Bewegungsvorrichtung innerhalb des Gehäuses angeordnet ist, wobei die Reinigungsvorrichtung mit der Bewegungsvorrichtung bewegungsgekoppelt ist. Mit Hilfe der Bewegungsvorrichtung kann die Reinigungsvorrichtung dann durch die Schleuse bewegt werden, um die Öffnung des Rollenherdofens zu reinigen.

Die Bewegungsvorrichtung dient in weiterer Ausgestaltung der Erfindung dem Zweck, dass die Reinigungsvorrichtung mittels der Bewegungsvorrichtung wenigstens in zwei Raumrichtungen bewegbar ist. Neben einer translatorischen Bewegung durch die Schleuse zur Reinigung der Öffnung des Rollenherdofens kann die Bewegungsvorrichtung auch dazu dienen, die Reinigungsvorrichtung innerhalb des Gehäuses der Tragrollenwechselvorrichtung in eine Position zu bewegen, in welcher die Reinigungsvorrichtung während des Tragrollenwechsels weder den Demontage- noch den Montagevorgang stört und behindert.

In weiterer Ausgestaltung der Tragrollenwechselvorrichtung besteht eine konstruktiv einfache Möglichkeit, die Reinigungsvorrichtung translatorisch innerhalb des Gehäuses der Tragrollenwechselvorrichtung zu verfahren, darin, dass die Bewegungsvorrichtung einen Schlitten umfasst, an dem die Reinigungsvorrichtung angebracht ist und der an einer innerhalb des Gehäuses verlaufenden Schienenführung in Richtung der Schleuse und von dieser weg verfahrbar gelagert ist.

Zur Erhöhung der Möglichkeiten, die Reinigungsvorrichtung innerhalb des Gehäuses der Tragrollenwechselvorrichtung zu verfahren, um die Reinigungsvorrichtung beispielsweise platzsparend unterzubringen, wenn sie nicht benötigt wird, sieht die Erfindung in weiterer Ausgestaltung vor, dass die Bewegungsvorrichtung eine Hub- und Senkeinrichtung umfasst, an der die Reinigungsvorrichtung angebracht ist und durch die die Reinigungsvorrichtung innerhalb des Gehäuses in ihrer horizontalen Position verstellbar gehalten ist. Die Reinigungsvorrichtung kann folglich nicht nur translatorisch durch die Schleuse und von dieser weg bewegt werden, sondern auch relativ zu der Schleuse angehoben und abgesenkt werden, so dass die Reinigungsvorrichtung auch in Nähe des Bodens oder der Decke des Gehäuses innerhalb der Tragrollenwechselvorrichtung angeordnet werden kann.

Die Erfindung sieht in weiterer Ausgestaltung vor, dass die Reinigungsvorrichtung wenigstens ein zur Reinigung der Öffnung dienendes Bürstenelement und eine mit dem Bürstenelement gekoppelte Antriebseinheit umfasst, wobei die Antriebseinheit das Bürstenelement während des Reinigungsvorgangs translatorisch und/oder rotatorisch antreibt. Auf diese Weise kann eine gründliche Reinigungswirkung erzielt und Fasern sowie Staub aus der Öffnung des Rollenherdofens entfernt werden.

Damit die Reinigungsvorrichtung auch nur dann zum Einsatz kommt, wenn es erforderlich ist und die Öffnung des Rollenherdofens entsprechend stark mit Faserresten und/oder Staub verschmutzt ist, sieht die Erfindung in weiterer Ausgestaltung der Tragrollenwechselvorrichtung vor, dass innerhalb des Gehäuses eine Kamera zur Aufnahme von bewegten und/oder statischen Aufnahmen der Öffnung angeordnet ist. Mit Hilfe der Kamera kann überprüft werden, wie stark die Öffnung des Rollenherdofens verschmutzt ist und ob eine Reinigung der Öffnung erforderlich ist.

Von besonderem Vorteil ist es dann, wenn die Kamera innerhalb des Gehäuses verfahrbar angeordnet ist. Ebenso wie bei der Reinigungsvorrichtung besteht durch die verfahrbare Anordnung die Möglichkeit, die Kamera platzsparend innerhalb des Gehäuses anzuordnen, damit die Kamera den Demontage- und Montagevorgang beim Tragrollenwechsel nicht behindert.

Zur Einsparung eines zusätzlichen Antriebs, um die Kamera innerhalb des Gehäuses der Tragrollenwechselvorrichtung verfahren zu können, sieht die Erfindung in Ausgestaltung der Tragrollenwechselvorrichtung vor, dass die Kamera an der Reinigungsvorrichtung bewegungsgekoppelt angebracht ist und gemeinsam mit der Reinigungsvorrichtung bewegbar ist.

Um den Staub und die Faserreste, welche die Reinigungsvorrichtung während des Reinigungsvorgangs gelöst und gelockert hat, auch von der Öffnung des Rollenherdofens weg zu befördern, ist in Ausgestaltung der Erfindung vorgesehen, dass die Tragrollenwechselvorrichtung ferner ein Absaugsystem zum Abführen von durch den Reinigungsvorgang gelösten Verunreinigungen aufweist, wobei das Absaugsystem eine in der Wandung der Schleuse ausgebildete Absaugöffnung und eine mit der Absaugöffnung verbundene Absaugleitung umfasst, welche die Gehäuseatmosphäre mitsamt durch den Reinigungsvorgang gelösten Verunreinigungen abführt.

Bei der Gehäuseatmosphäre handelt es sich um eine Atmosphäre aus Schutzgas. Damit nicht nach jedem Reinigungsvorgang neues Schutzgas in das Gehäuse geleitet werden muss, sieht die Erfindung in weiterer Ausgestaltung der Tragrollenwechselvorrichtung vor, dass das Absaugsystem ferner eine Filtereinrichtung und eine Zuführleitung umfasst, wobei die Absaugleitung zu der die Verunreinigungen von der Gehäuseatmosphäre trennenden Filtereinrichtung führt, von der aus die Zuführleitung die gereinigte Gehäuseatmosphäre zurück in das Innere des Gehäuses führt. Das Schutzgas des Gehäuses zirkuliert also, indem es von dem Absaugsystem abgesaugt und der Filtereinrichtung zugeführt wird, bevor das gefilterte Schutzgas dem Gehäuse wieder zugeführt wird. Dabei ist es von besonderem Vorteil, wenn die Filtereinrichtung als ein Fliehkraftabscheider ausgebildet ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in schematischer Draufsicht einen Rollenherdofen mit einer erfindungsgemäßen Tragrollenwechselvorrichtung, die seitlich am Rollenherdofen verfahrbar ausgebildet ist,
Figur 2 die erfindungsgemäße Tragrollenwechselvorrichtung in perspektivischer Ansicht,
Figur 3 eine vergrößerte Darstellung der in Figur 2 gezeigten Tragrollenwechselvorrichtung mit einem daran angebrachten Absaugsystem (Absaug- und Rezirkulationssystem) in perspektivischer Ansicht,
Figur 4 eine vergrößerte Darstellung des inneren Aufbaus der Tragrollenwechselvorrichtung in einer seitlichen Perspektivansicht,
Figur 5 eine seitliche Schnittansicht der erfindungsgemäßen Tragrollenwechselvorrichtung, bei der eine Reinigungsvorrichtung in einer Ruheposition angeordnet ist, und
Figur 6 eine seitliche Schnittansicht der erfindungsgemäßen Tragrollenwechselvorrichtung, bei der die Reinigungsvorrichtung in einer Betriebsposition angeordnet ist.

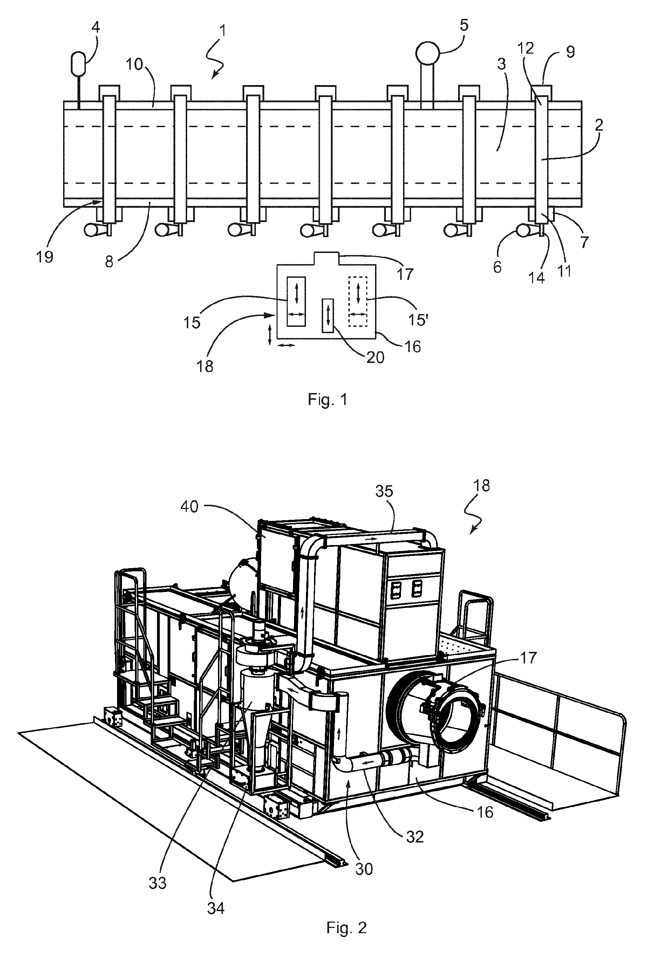

In Figur 1 ist in schematischer Draufsicht ein Rollenherdofen 1 gezeigt, bei dem die jeweiligen Tragrollen 2 an ihren Längsenden 11, 12 mittels eines jeweiligen Lagerungssystems drehbar gelagert sind. In dem in Figur 1 gezeigten Ausführungsbeispiel ist der Rollenherdofen 1 zum kontinuierlichen Wärmebehandeln von Stahlbändern 3 ausgebildet. Figur 1 ist eine exemplarische Darstellung und zeigt lediglich einen Ausschnitt des Rollenherdofens 1. Für diesen Ausschnitt weist der Rollenherdofen 1 sieben Tragrollen 2 auf, wobei aus Gründen der Übersichtlichkeit nur eine der sieben Tragrollen 2 mit Bezugszeichen versehen ist. Der Rollenherdofen 1 ist gegenüber seiner Umgebung hermetisch abgeschlossen und wird unter einer Schutzgasatmosphäre betrieben. Die Tragrollen 2 sind entlang der Längsachse des Rollenherdofens 1 angeordnet und transportieren das mit Wärme zu behandelnde Stahlband 3, wobei der Prozess bei Temperaturen von über 1000°C im Inneren des Rollenherdofens 1 stattfindet. Eine Heizvorrichtung 4 sorgt für die für den Prozess erforderliche Temperatur im Inneren des Rollenherdofens 1, wohingegen eine Schutzgasvorrichtung 5 dafür verantwortlich ist, dass sich im Inneren des Rollenherdofens 1 die gewünschte Schutzgasatmosphäre einstellt. Jede Tragrolle 2 ist außerhalb des Rollenherdofens 1 mit einer Antriebseinheit 6 verbunden, welche die jeweilige Tragrolle 2 rotierend antreibt, um das Stahlband 3 durch den Rollenherdofen 1 zu fördern. Das in den Figuren nicht im Detail dargestellte Lagerungssystems einer jeweiligen Tragrolle 2 umfasst ein erstes Lagerelement 7, welches auf einer ersten Seitenwand 8 des Rollenherdofens 1 angebracht ist und bei einem Tragrollenwechsel von der ersten Seitenwand 8 gelöst werden muss, und ein zweites Lagerelement 9, welches auf einer der ersten Seitenwand 8 gegenüberliegenden, zweiten Seitenwand 10 des Rollenherdofens 1 angebracht ist und bei einem Tragrollenwechsel von der zweiten Seitenwand 10 nicht gelöst werden muss, sondern dort zur Lagerung der neu einzusetzenden Tragrolle 2 verbleibt. Bei dem Lagerungssystem ist eine jeweilige Tragrolle 2 mit ihrem ersten Längsende 11 mittels des ersten Lagerelements 7 und mit ihrem zweiten Längsende 12 mittels des zweiten Lagerelements 9 drehbar im Rollenherdofen 1 gelagert, wobei das erste Lagerelement 7 und das zweite Lagerelement 9 derart gasdicht ausgebildet sind, dass während des Ofenbetriebs kein Schutzgas aus dem Inneren des Rollenherdofens 1 entweichen kann. Von dem ersten Längsende 11 einer jeweiligen Tragrolle 2 aus erstreckt sich ein Wellenzapfen 14, der aus einem jeweiligen ersten Lagerelement 7 nach außen hin hervorsteht und mit einer zugeordneten Antriebseinheit 6 antriebsverbunden ist, durch die eine jeweilige Tragrolle 2 im Betrieb des Rollenherdofens 1 gedreht wird. Bei einem Wechsel einer Tragrolle 2 wird zunächst die Antriebseinheit 6 von dem Wellenzapfen 14 gelöst, bevor dann die zu demontierende Tragrolle 2 mitsamt dem ersten Lagerelement 7 vom Rollenherdofen 1 entfernt wird, wohingegen das zweite Lagerelement 9 am Rollenherdofen 1 verbleibt und eine neu eingesetzte Tragrolle 2 drehbar lagert.

Wie Figur 1 ferner schematisch zeigt, ist seitlich vom Rollenherdofen 1 eine Tragrollenwechselvorrichtung 18 zum Wechseln einer Tragrolle 2 des Rollenherdofens 1 angeordnet, die entlang der ersten Seitenwand 8 des Rollenherdofens 1 und zur Seitenwand 8 hin und von dieser weg verfahrbar ausgebildet ist, um vor einer zu demontierenden Tragrolle 2 positioniert zu werden. Zum Tragrollenwechsel wird das erste Lagerelement 7 von der ersten Seitenwand 8 gelöst und die auszuwechselnde Tragrolle 2 mitsamt dem ersten Lagerelement 7 mit Hilfe einer Tragrollenhandhabungsvorrichtung 15 der Tragrollenwechselvorrichtung 18 aus dem Rollenherdofen 1 gezogen. Die Tragrollenwechselvorrichtung 18 umfasst neben der Tragrollenhandhabungsvorrichtung 15 ein gegenüber der äußeren Umgebungsatmosphäre abdichtbares Gehäuse 16, das eine zum Ankoppeln an den Rollenherdofen 1 dienende Schleuse 17 aufweist, über die ein Zugang unter Ausschluss der Umgebungsatmosphäre auf eine zu demontierende Tragrolle 2 von dem Gehäuse 16 aus möglich ist. Die Tragrollenhandhabungsvorrichtung 15 ist in dem Gehäuse derart verfahrbar angeordnet, dass sie zu der Seitenwand 8 hin und von dieser weg sowie seitlich zur Seitenwand 8 bewegbar ist. Dabei kann eine einzige Tragrollenhandhabungsvorrichtung 15 sowohl zur Demontage einer Tragrolle 2 vom Rollenherdofen 1 als auch zur Montage einer neuen Tragrolle 2 eingesetzt werden. Denkbar ist es auch, dass eine Tragrollenhandhabungsvorrichtung 15 zur Demontage eingesetzt wird und anschließend vom Ofen wegbewegt wird, wonach zur Montage eine weitere Tragrollenhandhabungsvorrichtung 15' verwendet wird, die mit einer zu montierenden Tragrolle 2 bestückt ist, was in Figur 1 schematisch angedeutet ist. Dabei sind die beiden Tragrollenhandhabungsvorrichtungen 15 und 15' innerhalb des gasdichten Gehäuses 16 verfahrbar, vor der Schleuse 17 positionierbar sowie zumindest teilweise durch die Schleuse 17 hindurch aus dem Gehäuse 16 ausfahrbar. Ein solcher Tragrollenwechsel kann somit mit einer oder zwei Tragrollenhandhabungsvorrichtungen 15, 15' erfolgen, wobei der Rollenherdofen 1 vor dem Tragrollenwechsel auf ca. 800°C abgekühlt und mit Stickstoff gespült wird.

Um den Wechsel einer Tragrolle zeitlich kurz zu halten und damit die Stillstandzeit zu minimieren, wird der Tragrollenwechsel seitlich des Rollenherdofens 1 durchgeführt, wobei der Betrieb der Tragrollenhandhabungsvorrichtung 15, 15' gegenüber der äußeren Umgebungsatmosphäre abgeschirmt erfolgt. Dementsprechend wird die eine oder werden die beiden Tragrollenhandhabungsvorrichtungen 15, 15' in dem gegenüber der äußeren Umgebungsatmosphäre abgedichteten Gehäuse 16 betrieben. In einem solchen Gehäuse 16 sind dann die eine einzige oder die beiden Tragrollenhandhabungsvorrichtungen 15, 15' verfahrbar angeordnet und untergebracht. Bei einem Tragrollenwechsel mit einem solchen gasdichten Gehäuse 16, welches gegenüber der äußeren Umgebung hermetisch abgedichtet ist, wird vor dem eigentlichen Tragerollenwechsel die Antriebseinheit 6 von dem Wellenzapfen 14 der Tragrolle 2 entfernt. Durch die Schleuse 17 ist das Gehäuse 16 abgedichtet gegenüber der äußeren Atmosphäre bzw. Umgebung an den Rollenherdofen 1 andockbar bzw. ankoppelbar. Dabei umschließt die Schleuse 17 das erste Lagerelement 7, welches zusammen mit der zu demontierenden Tragrolle 2 aus dem Rollenherdofen 1 dann herausgezogen wird. Mit anderen Worten ist die eine oder sind die beiden Tragrollenhandhabungsvorrichtungen 15, 15' in dem gegenüber der äußeren Umgebung abgedichteten Gehäuse 16 verfahrbar angeordnet und wenigstens zum Teil durch die Schleuse 17 in der Wandung des Gehäuses 16 aus diesem ausfahrbar, um Zugriff auf die zu demontierende Tragrolle 2 zu haben. Nach dem Andocken bzw. Ankoppeln des Gehäuses 16 an dem Rollenherdofen 1 wird in dem Gehäuse 16 selbst auch eine Schutzgasatmosphäre eingestellt, die der Schutzgasatmosphäre des Inneren des Rollenherdofens 1 entspricht. Mit anderen Worten wird in dem Gehäuse 16 das gleiche Schutzgas wie in dem Rollenherdofen 1 verwendet, ohne dass dabei in dem Gehäuse 16 die gleiche Temperatur wie in dem Rollenherdofen 1 vorherrscht. Bei Unterbringung in dem Gehäuse 16 kann die Tragrollenhandhabungsvorrichtung 15 oder können die beiden Tragrollenhandhabungsvorrichtungen 15, 15' innerhalb des Gehäuses 16 wenigstens in zwei Raumrichtungen verfahrbar sein, was durch die Pfeile in Figur 1 angedeutet ist. Zusätzlich ist das Gehäuse 16 bzw. die Tragrollenwechselvorrichtung 18 in wenigstens zwei Raumrichtungen verfahrbar, um seitlich an die gewünschte Tragrolle 2 heranzufahren und um zum Andocken sich der ersten Seitenwand 8 zu nähern.

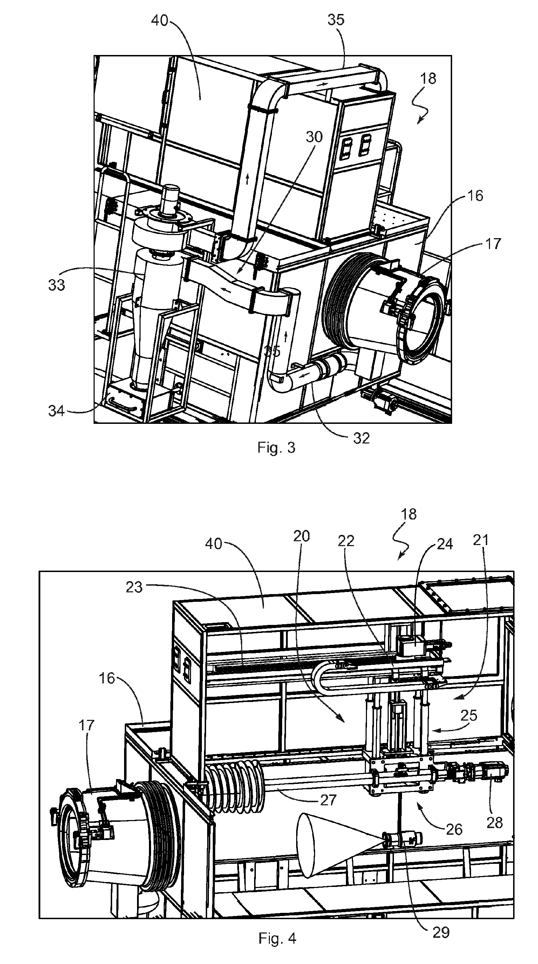

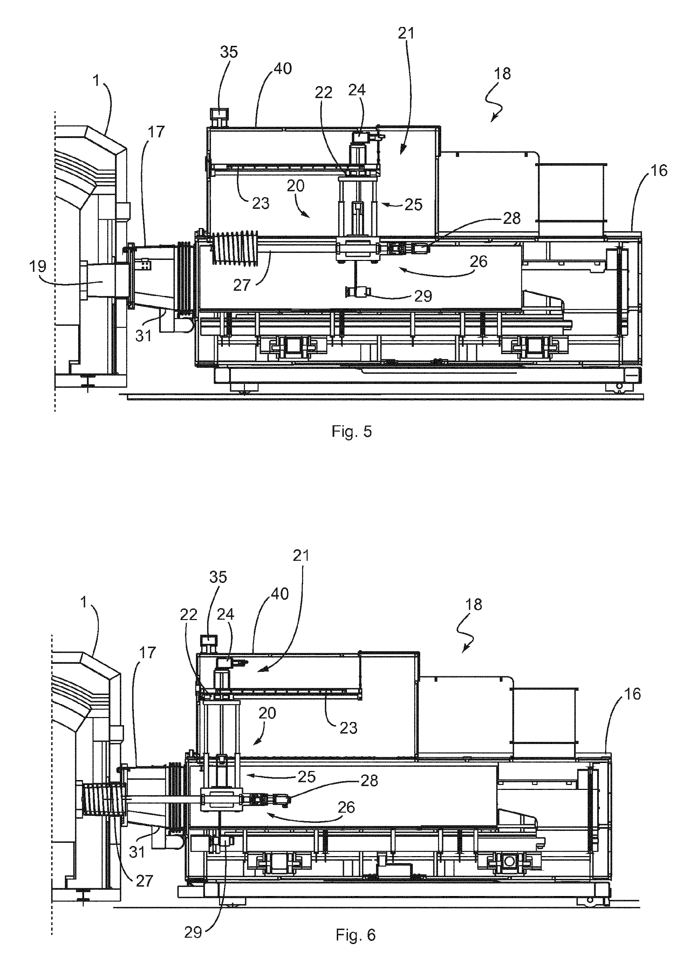

Die auszuwechselnde Tragrolle 2 wird beim Tragrollenwechsel aus einer Öffnung 19 (siehe beispielsweise Figur 5) aus der ersten Seitenwand 8 des Rollenherdofens 1 herausgezogen. Beim Herausziehen der auszutauschenden Tragrolle 2 können Rückstände von Isoliermaterial in der Öffnung 19 verbleiben, was sich als hinderlich bei der Montage einer neuen Tragrolle 2 erweisen kann. Das Isoliermaterial stammt von dem Isolationsstopfen, der zusammen mit dem ersten Lagerelement 7 eine Baueinheit bildet, da sie mechanisch zusammengebaut sind. Der Isolationsstopfen wird rundum mit Fasermaterial umwickelt und in der Öffnung 19 eingedichtet. Von dem Betreiber des Rollenherdofens 1 ist es erwünscht, dass die Rückstände aus der entsprechenden Öffnung 19, in welcher die auszutauschende Tragrolle 2 gelagert ist, entfernt werden, wenn ein Tragrollenwechsel erfolgt. Zu diesem Zweck weist die Tragrollenwechselvorrichtung 18 eine zum Reinigen der Öffnung 19 des Rollenherdofens 1 ausgebildete Reinigungsvorrichtung 20 (siehe zum Beispiel Figuren 4, 5 und 6) auf, die innerhalb des Gehäuses 16 angeordnet ist. Damit die Reinigungsvorrichtung 20 innerhalb des Gehäuses 16 und durch die Schleuse 17 hindurch in die Öffnung 19 verfahrbar ist, ist eine Antriebsvorrichtung 21 innerhalb des Gehäuses 16 angeordnet, die mit der Reinigungsvorrichtung 20 verbunden ist. Genauer gesagt ist die Reinigungsvorrichtung 20 mit der Bewegungsvorrichtung 21 bewegungsgekoppelt, wobei die Reinigungsvorrichtung 20 mittels der Bewegungsvorrichtung 21 wenigstens in zwei Raumrichtungen bewegbar ist. Die Bewegungsvorrichtung 21 kann nämlich die Reinigungsvorrichtung 20 in vertikaler und horizontaler Richtung verfahren. Hinsichtlich der zu erbringenden Bewegbarkeit der Reinigungsvorrichtung 20 weist die Bewegungsvorrichtung 21 einen Schlitten 22 auf, an dem die Reinigungsvorrichtung 20 angebracht ist. Der Schlitten 22 selbst ist entlang einer Schienenführung 23 verfahrbar, wobei sich die Schienenführung 23 innerhalb des Gehäuses 16 in Richtung der Schleuse 17 und im Wesentlichen quer zum Rollenherdofen 1 erstreckt. Dementsprechend ist die Reinigungsvorrichtung 20, die an der Bewegungsvorrichtung 21 befestigt ist, in Richtung der Schleuse 17 und von dieser weg bewegbar. Für die Bewegung des Schlittens 22 entlang der Schienenführung 23 ist ein in den Figuren nicht näher dargestellter Antrieb vorgesehen. Oberhalb der Schienenführung 23 ist ferner eine Antriebsvorrichtung 24 angeordnet, die sich mit dem Schlitten 22 mitbewegt. Diese Antriebsvorrichtung 24 treibt eine Hub- und Senkeinrichtung 25 an, die mehrere (hydraulisch oder pneumatisch) bewegbare Zylinder umfasst, die sich von dem Schlitten 22 aus in Richtung des Bodens des Gehäuses 16 erstrecken und an ihren Enden eine Reinigungseinheit 26 halten. Die Reinigungseinheit 26 weist ein Bürstenelement 27 und eine mit dem Bürstenelement 27 gekoppelte Antriebseinheit 28 auf, durch die das Bürstenelement 27 in dem dargestellten Ausführungsbeispiel rotatorisch angetrieben wird. Alternativ könnte die Antriebseinheit 28 auch eine rein translatorische oder eine translatorisch-rotatorische Bewegung des Bürstenelements 27 bewirken. Die Hub- und Senkeinrichtung 25 in Form der bewegbaren Zylinder trägt an ihrem dem Schlitten 22 abgewandten Ende die Reinigungseinheit 26, so dass die Reinigungseinheit 26 innerhalb des Gehäuses 16 in ihrer horizontalen Position verstellbar gehalten ist. Somit ist die Reinigungseinheit 26 insgesamt mit Hilfe des Schlittens 22 in Richtung der Schleuse 17 und von dieser weg verfahrbar und mit Hilfe der Hub- und Senkeinrichtung 25 in ihrer horizontalen Anordnung auf die Schleuse 17 ausrichtbar, um durch die Schleuse 17 hindurch ausgefahren zu werden und die Öffnung 19 zu reinigen. Mit Hilfe der Bewegungsvorrichtung 21 ist es folglich möglich, die Reinigungsvorrichtung 20 in einer Ruheposition (siehe Figur 5), in welcher die Reinigungseinheit 26 angehoben und zurückgezogen von der Schleuse 17 innerhalb des Gehäuses 16 angeordnet ist, und in einer Betriebsposition (siehe Figur 6), in welcher die Reinigungseinheit 26 bis auf die Höhe der Schleuse 17 abgesenkt und durch die Schleuse 17 hindurch in die Öffnung 19 geschoben angeordnet ist, zu positionieren.

Ferner ist innerhalb des Gehäuses 16 eine Kamera 29 zur Aufnahme von bewegten und/oder statischen Aufnahmen der Öffnung 19 angeordnet. Mit Hilfe der Aufnahme bzw. Aufnahmen, die dann gemacht werden, wenn die auszuwechselnde Tragrolle 2 demontiert und in der Öffnung 19 keine Tragrolle 2 angeordnet ist, kann der Grad der Verschmutzung der Öffnung 19 festgestellt werden und basierend darauf entschieden werden, ob die Öffnung 19 gereinigt werden soll. Die Kamera 29 ist horizontal versetzt zur Reinigungseinheit 26 an der Hub- und Senkeinrichtung 25 befestigt, so dass auch die Kamera 29 in ihrer horizontalen Position verfahrbar bzw. verstellbar ist. Anders ausgedrückt ist die Kamera 29 an der Reinigungsvorrichtung 20 bewegungsgekoppelt angebracht und gemeinsam mit der Reinigungsvorrichtung 20 innerhalb des Gehäuses 16 bewegbar.

Das Gehäuse 16 der Tragrollenwechselvorrichtung 18 ist gestuft ausgebildet. Die Decke des Gehäuses 16 weist einen erhöhten Abschnitt 40 auf, der sich in Richtung der Schleuse 17 erstreckt. Dieser Abschnitt 40 dient dazu, die Bauteile der Bewegungsvorrichtung 21 so unterzubringen, dass sie den Betrieb der einen oder beiden Tragrollenhandhabungsvorrichtungen 15, 15' nicht behindern. Beispielsweise ist innerhalb des oberen Abschnitts der Schlitten 22, die Antriebseinrichtung 24 sowie die Hub- und Senkeinrichtung 25 angeordnet, wobei die Schienenführung 23 innerhalb des Abschnitts 40 des Gehäuses 16 verläuft. In der Ruheposition ist darüber hinaus die Reinigungseinheit 26 im Wesentlichen auch innerhalb des Abschnitts 40 angeordnet. Die Kamera 29 kann seitlich verschwenkt werden, um aus dem Bereich zu gelangen, welcher für den Tragrollenwechsel zur Montage frei bleiben muss, damit die eine oder die beiden Tragrollenhandhabungsvorrichtungen 15, 15' die zu montierende Tragrolle 2 durch die Schleuse 17 des Gehäuses 16 und die Öffnung 19 des Rollenherdofens 1 hindurch einsetzen können. In dem dargestellten Ausführungsbeispiel ist die Kamera 29 jedoch unterhalb des Bürstenelements 27 fest angeordnet und wird in Abhängigkeit des Bürstenelements 27 mitbewegt.

Bei einem Tragerollenwechsel wird zunächst die auszuwechselnde Tragrolle 2 vom Rollenherdofen 1 demontiert und aus der Öffnung 19 herausgezogen. Bevor eine neue Tragrolle 2 durch die Schleuse 17 und die Öffnung 19 hindurch in den Rollenherdofen 1 eingebracht wird, führt die Kamera 29 eine visuelle Kontrolle des Grades der Verschmutzung der Öffnung 19 durch, indem sie in der in Figur 5 dargestellten Kontrollposition (Ruheposition der Reinigungsvorrichtung 20) angeordnet ist und Aufnahmen von der Öffnung macht, die an einen Bildschirm eines Steuerpults weitergeleitet werden, wo dann eine Bedienperson entscheidet, ob die Öffnung gereinigt wird oder nicht. In der Kontrollposition der Kamera 29 ist das Bürstenelement 27 im Bereich des gestuften Abschnitts 40 des Gehäuses 16 angeordnet, wobei sich die Reinigungsvorrichtung 20 dabei in der Ruheposition befindet, wie in Figur 5 gezeigt ist. Wenn aufgrund der Aufnahmen der Kamera 29 entschieden wird, die Öffnung 19 des Rollenherdofens 1 zu reinigen, dann bewirkt die Hub- und Senkeinrichtung 25, dass die Reinigungseinheit 26 abgesenkt wird, so dass das Bürstenelement 27 auf derselben horizontalen Ebene wie die Öffnung 19 des Rollenherdofens 1 angeordnet ist. Gleichzeitig fährt die Bewegungsvorrichtung 21 entlang der Schienenführung 23, so dass der Schlitten 22 in Richtung der Öffnung 19 bewegt wird, bis das Bürstenelement 27 durch die Schleuse 17 hindurch in die Öffnung 19 einfährt, um diese zu reinigen. Dabei wird das Bürstenelement 27 von der Antriebseinheit 28 rotatorisch angetrieben und gedreht, so dass das Bürstenelement 27 drehend in die Öffnung 19 einfährt. Dies ist in Figur 6 gezeigt und entspricht einer Betriebsposition der Reinigungsvorrichtung 20. Sobald der Reinigungsvorgang beendet ist, wird der Schlitten 22 entlang der Schienenführung 23 aus der Öffnung 19 herausgezogen und das Bürstenelement 27 in die in Figur 5 gezeigte Ruheposition gefahren. Dabei besteht hier die Möglichkeit, dass die Kamera 29 überprüft, ob der Reinigungsvorgang gründlich genug war, um den Grad der Verschmutzung der Öffnung 19 zu reduzieren oder Verschmutzungen ganz zu entfernen. Sollte die Öffnung 19 ausreichend gereinigt sein, so wird die Kamera 29 seitlich verschwenkt oder horizontal nach oben verfahren, damit die Kamera 29 nicht das Einsetzen einer neuen Tragrolle 2 durch die Schleuse 17 und Öffnung 19 hindurch in den Rollenherdofen 1 blockiert.

Damit die mit Hilfe des Bürstenelements 27 gelockerten Verschmutzungen auch aus der Öffnung 19 entfernt werden, kann die Drehung des Bürstenelements 27 in Verbindung mit der Ausrichtung der Borsten des Bürstenelements 27 dafür sorgen, dass die gelösten Verschmutzungen von dem Bürstenelement 27 nach Art eines Schneckenförderers von der Öffnung in Richtung der Schleuse 17 befördert werden. Andererseits werden die gelösten Verschmutzungen auch beim Herausziehen des Bürstenelements 27 aus der Öffnung in Richtung der Schleuse 17 befördert. Von der Schleuse 17 werden die gelösten Verschmutzungen, also Staub und Faserreste von Isoliermaterial, dann von einem Absaugsystem 30 (siehe zum Beispiel Figuren 2 und 3) entfernt. Das Absaugsystem 30 umfasst eine in der Wandung der Schleuse 17 ausgebildete Absaugöffnung 31 (siehe zum Beispiel Figuren 5 und 6), die mit einer zur Abführung der Verschmutzungen dienenden Absaugleitung 32 (siehe Figuren 2 und 3) verbunden ist. Von der Absaugleitung 32 werden aber nicht nur die Verschmutzungen sondern auch die Gehäuseatmosphäre abgeführt, die üblicherweise im Betrieb der Tragrollenwechselvorrichtung 18 eine Schutzgasatmosphäre ist. Die Absaugleitung 32 führt zu einer Filtereinrichtung 33, welche die Verunreinigungen von der Gehäuseatmosphäre trennt. Dabei ist in dem vorliegenden Ausführungsbeispiel die Filtereinrichtung 33 als ein Fliehkraftabscheider ausgebildet. Die in der Filtereinrichtung 33 von der Gehäuseatmosphäre abgetrennten Verschmutzungen gelangen in einen Sammelbehälter 34, der am Fuß der Filtereinrichtung 33 angeordnet ist. Die von den Verschmutzungen gereinigte Gehäuseatmosphäre gelangt von der Filtereinrichtung 33 über eine Zuführleitung 35 zurück in das Innere des Gehäuses 16, so dass es durch die Filterung nicht notwendig ist, infolge der Absaugung neues Schutzgas in das Gehäuse 16 zu leiten.

Zusammenfassend ist eine Tragrollenwechselvorrichtung 18 vorstehend beschrieben worden, die zum Wechseln einer Tragrolle 2 eines Rollenherdofens 1 dient und die ein gegenüber der äußeren Umgebungsatmosphäre abdichtbares Gehäuse 16 und wenigstens eine zum Demontieren und Montieren von Tragrollen 2 ausgebildete Tragrollenhandhabungsvorrichtung 15, 15' aufweist. Das Gehäuse 16 weist eine zum Ankoppeln an den Rollenherdofen 1 dienende Schleuse 17 auf, über die ein Zugang unter Ausschluss der Umgebungsatmosphäre auf eine zu demontierende Tragrolle 2 von dem Gehäuse 16 aus möglich ist. Ferner ist die oder sind die Tragrollenhandhabungsvorrichtungen 15, 15' in dem Gehäuse 16 verfahrbar angeordnet. Sollten Faserreste eines Isolierstopfens, welcher den Zwischenraum zwischen dem Längsende 11 der Tragrolle 2 und der Öffnung 19 des Rollenherdofens 1 abdichtet, an der Öffnung 19 kleben geblieben sein, können diese Faserreste mit der erfindungsgemäßen Reinigungsvorrichtung 20, die zum Reinigen der Öffnung 19 ausgebildet und innerhalb des Gehäuses 16 angeordnet ist, entfernt werden. Das Verfahren zur Reinigung der Öffnung 19 des Rollenherdofens 1 läuft wie folgt ab. Mit Hilfe der Kamera 29 wird zunächst überprüft, wie stark die Öffnung 19 mit beispielsweise den Faserresten des Isolierstopfens verschmutzt ist. Sollte eine Reinigung der Öffnung 19 erforderlich sein, wird das Bürstenelement 27 abgesenkt, bis es mittig zu der Öffnung 19 positioniert ist. Dann wird die Kamera 29 aus dem Bewegungspfad des Bürstenelements 27 bewegt und das Absaugsystem 30 mitsamt der Filtereinrichtung 33 in Betrieb gesetzt. Ferner dreht nun die Antriebseinheit 28 das Bürstenelement 27, worauf dann der Schlitten 22 stückweise in Richtung der Öffnung 19 fährt, wodurch das Bürstenelement 27 dann in die Öffnung 19 einfährt und diese säubert. Nach einer gewissen Zeitdauer wird das Bürstenelement 27 wieder aus der Öffnung 19 zurückgezogen und in die Ruheposition verfahren. Mit Hilfe der Kamera 29, die nun so positioniert wird, dass sie Aufnahmen von der Öffnung 19 machen kann, um zu beurteilen, ob die Reinigung erfolgreich war und als abgeschlossen betrachtet werden darf. Sofern die Reinigung abgeschlossen ist, wird die Antriebseinheit 28 abgeschaltet und das Bürstenelement 27 sowie die Kamera 29 in eine Position bewegt, in welcher sie den Tragrollenwechsel nicht stören.

Der Fachmann wird erkennen, dass die Absaugung und Rückführung des Schutzgases innerhalb der Tragrollenwechselvorrichtung 18 eine Rezirkulation des verunreinigten und gereinigten Schutzgases darstellt. Diese Rezirkulation soll nur während des Bürstvorgangs und in der Zeit der Bewegung der Bürstvorrichtung in die Ruheposition arbeiten.

Die vorstehend beschriebene Erfindung ist selbstverständlich nicht auf die beschriebenen und dargestellten Ausführungsformen beschränkt. Es ist ersichtlich, dass an der in der Zeichnung dargestellten Ausführungsform zahlreiche, dem Fachmann entsprechend der beabsichtigten Anwendung naheliegende, Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Tragrollenwechselvorrichtung (18) zum Wechseln einer Tragrolle (2) eines Rollenherdofens (1), aufweisend:
ein gegenüber der äußeren Umgebungsatmosphäre abdichtbares Gehäuse (16), das eine an den Rollenherdofen (1) ankoppelbare Schleuse (17) aufweist, über die ein Zugang unter Ausschluss der Umgebungsatmosphäre auf eine zu demontierende Tragrolle (2) des Rollenherdofens (1) vom Inneren des Gehäuses (16) aus möglich ist, und
wenigstens eine zum Demontieren und Montieren von Tragrollen (2) ausgebildete Tragrollenhandhabungsvorrichtung (15, 15'), die in dem Gehäuse (16) verfahrbar angeordnet ist und die zumindest teilweise durch die Schleuse (17) hindurch aus dem Gehäuse (16) ausfahrbar ausgebildet ist,
**dadurch gekennzeichnet, dass**
eine zum Reinigen einer in einer Seitenwand (8) des Rollenherdofens (1) ausgeformten Öffnung (19), durch die hindurch eine Tragrolle (2) in den Rollenherdofen (1) einbringbar und herausnehmbar ist, ausgebildete Reinigungsvorrichtung (20) innerhalb des Gehäuses (16) angeordnet ist.

2. Tragrollenwechselvorrichtung (18) nach Anspruch 1,
**dadurch gekennzeichnet, dass** die Reinigungsvorrichtung (20) innerhalb des Gehäuses (16) verfahrbar angeordnet ist und wenigstens zum Teil durch die Schleuse (17) hindurch aus dem Gehäuse (16) ausfahrbar ausgebildet ist.

3. Tragrollenwechselvorrichtung (18) nach Anspruch 1 oder 2, **dadurch gekennzeichnet, dass** eine Bewegungsvorrichtung (21) innerhalb des Gehäuses (16) angeordnet ist, wobei die Reinigungsvorrichtung (20) mit der Bewegungsvorrichtung (21) bewegungsgekoppelt ist.

4. Tragrollenwechselvorrichtung (18) nach Anspruch 3,
**dadurch gekennzeichnet, dass** die Reinigungsvorrichtung (20) mittels der Bewegungsvorrichtung (21) wenigstens in zwei Raumrichtungen bewegbar ist.

5. Tragrollenwechselvorrichtung (18) nach Anspruch 3 oder 4, **dadurch gekennzeichnet, dass** die Bewegungsvorrichtung (21) einen Schlitten (22) umfasst, an dem die Reinigungsvorrichtung (20) angebracht ist und der an einer innerhalb des Gehäuses (16) verlaufenden Schienenführung (23) in Richtung der Schleuse (17) und von dieser weg verfahrbar gelagert ist.

6. Tragrollenwechselvorrichtung (18) nach einem der Ansprüche 3 bis 5, **dadurch gekennzeichnet, dass** die Bewegungsvorrichtung (21) eine Hub- und Senkeinrichtung (25) umfasst, an der die Reinigungsvorrichtung (20) angebracht ist und durch die die Reinigungsvorrichtung (20) innerhalb des Gehäuses (16) in ihrer horizontalen Position verstellbar gehalten ist.

7. Tragrollenwechselvorrichtung (18) nach einem der vorhergehenden Ansprüche, **dadurch gekennzeichnet, dass** die Reinigungsvorrichtung (20) wenigstens ein zur Reinigung der Öffnung (19) dienendes Bürstenelement (27) und eine mit dem Bürstenelement (27) gekoppelte Antriebseinheit (28) umfasst, wobei die Antriebseinheit (28) das Bürstenelement (27) während des Reinigungsvorgangs translatorisch und/oder rotatorisch antreibt.

8. Tragrollenwechselvorrichtung (18) nach einem der vorhergehenden Ansprüche, **dadurch gekennzeichnet, dass** innerhalb des Gehäuses (16) eine Kamera (29) zur Aufnahme von bewegten und/oder statischen Aufnahmen der Öffnung (19) angeordnet ist.

9. Tragrollenwechselvorrichtung (18) nach Anspruch 8,
**dadurch gekennzeichnet, dass** die Kamera (29) innerhalb des Gehäuses (16) verfahrbar angeordnet ist.

10. Tragrollenwechselvorrichtung (18) nach Anspruch 8 oder 9, **dadurch gekennzeichnet, dass** die Kamera (29) an der Reinigungsvorrichtung (20) bewegungsgekoppelt angebracht ist und gemeinsam mit der Reinigungsvorrichtung (20) bewegbar ist.

11. Tragrollenwechselvorrichtung (18) nach einem der vorhergehenden Ansprüche, **dadurch gekennzeichnet, dass** die Tragrollenwechselvorrichtung (18) ferner ein Absaugsystem (30) zum Abführen von durch den Reinigungsvorgang gelösten Verunreinigungen aufweist, wobei das Absaugsystem (30) eine in der Wandung der Schleuse (17) ausgebildete Absaugöffnung (31) und eine mit der Absaugöffnung (31) verbundene Absaugleitung (32) umfasst, welche die Gehäuseatmosphäre mitsamt durch den Reinigungsvorgang gelösten Verunreinigungen abführt.

12. Tragrollenwechselvorrichtung (18) nach Anspruch 11,
**dadurch gekennzeichnet, dass** das Absaugsystem (30) ferner eine Filtereinrichtung (33) und eine Zuführleitung (35) umfasst, wobei die Absaugleitung (32) zu der die Verunreinigungen von der Gehäuseatmosphäre trennenden Filtereinrichtung (33) führt, von der aus die Zuführleitung (35) die gereinigte Gehäuseatmosphäre zurück in das Innere des Gehäuses (16) führt.
